# EUROPEAN PATENT APPLICATION

(11) **EP 3 792 229 A1**
(43) Date of publication of application: **17.03.2021**
(21) Application number: 19833266.0
(22) Date of filing: 22.05.2019
(51) Int. Cl.: C03C 27/12, B32B 17/10, B60J 1/00

(54) **LAMINATED GLASS FOR AUTOMOTIVE WINDSHIELDS, AND METHOD FOR PRODUCING SAME**

(30) Priority: 13.07.2018 JP 2018133186
(71) Applicant: Central Glass Company, Limited, Ube-shi, Yamaguchi 755-0001 (JP)
(72) Inventor: MIYAMOTO, Takayuki, Matsusaka-shi, Mie 515-0001 (JP); YAMAKITA, Yuki, Matsusaka-shi, Mie 515-0001 (JP)
(74) Representative: Manitz Finsterwald Patent- und Rechtsanwaltspartnerschaft mbB
(86) International application number: PCT/JP2019/020210
(87) International publication number: WO 2020/012783

(57) **Abstract**

Provided is a laminated glass for a windshield, which includes a thin glass plate disposed on an interior side and has improved safety to guard against the occurrence of an internal impact event. A laminated glass for an automotive windshield according to one embodiment of the present invention includes: a resinous intermediate film layer; a curved first glass plate disposed on an exterior side; and a curved glass plate disposed on an interior side, the first and second glass plates being opposed to each other with the intermediate film layer interposed therebetween, wherein the first glass plate has a thickness ranging from 0.7 mm to 3 mm, wherein the second glass plate has a thickness ranging from 0.3 mm to 1.4 mm and being smaller than the thickness of the first glass plate, and wherein the second glass plate is made of a thermally-strengthened glass with a compressive stress of less than 5 MPa. With such a configuration, the laminated glass achieves improved safety to guard against the occurrence of an internal impact event.

## Description

### Field of the Invention

The present invention relates to a laminated glass for an automotive windshield and a production method thereof.

### Background Art

In automotive vehicles, improvements in the efficiency of energies such as gasoline fuel, electricity etc. have been required year by year. Accordingly, there has been a demand to reduce the weights of structural members used in the automotive vehicles. Under such circumstances, Patent Document 1 proposes a laminated glass formed with glass plates of different thicknesses for use as an automotive window glass, wherein the thickness of the exterior-side glass plate is 1.45 mm to 1.8 mm and wherein the thickness of the interior-side glass plate is 1.0 mm to 1.4 mm and is smaller than the thickness of the exterior-side glass plate.

Further, Patent Documents 2 and 3 each disclose a laminated glass formed with an exterior-side glass plate and an interior-side glass plate, wherein the exterior-side glass plate and the interior-side glass plate are laminated together via a resinous intermediate film layer in a state that the very thin flat glass plate is shaped according to the curved shape of the exterior-side glass plate. Patent Document 4 discloses a technique of bending two flat glass plates of different thicknesses, wherein the thick glass plate has a lower viscosity than that of the thin glass plate at any arbitrary temperature between the annealing point and softening point of the thick glass plate, in order to solve the problem that two flat glass plates of different thicknesses show different bending behaviors during their simultaneous bending against the background of the demand for weight reduction of an automotive laminated glass.

Patent Document 5 proposes, in order to solve the problem that a thin glass plate is easier to bend than a thick glass plate during heat-bending, a technique of bending glass plates, wherein the glass compositions of the glass plates are adjusted such that the thick glass plate has a lower viscosity than that of the thin glass plate in a temperature atmosphere for bending of the glass plates and wherein uneven temperature distributions are formed in main surfaces of the respective glass plates during bending.

On the other hand, there is a problem that the use of the thin glass plate leads to a decrease in the mechanical strength of the laminated glass. Patent Document 6 hence discloses an automotive laminated glass having an exterior-side glass plate made of a non-chemically-strengthened glass and an interior-side glass plate made of a chemically-strengthened glass with a specific thickness and compressive stress value. Furthermore, Patent Document 7 discloses an automotive laminated glass having exterior- and interior-side glass plates each made of a chemically-strengthened aluminosilicate glass.

It is necessary to pay attention to the impact applied to the interior-side glass plate of the laminated glass by a vehicle passenger at the occasion of a vehicle accident. In Patent Document 8 in which a laminated glass having a thin glass plate disposed on an interior side is disclosed, for example, a simulation test is conducted by falling a rigid ball of 2260 g weight onto the interior-side glass plate from a height of 4 m so as to simulate a collision of a passenger's head with the laminated glass; and the laminated glass though which the rigid ball does not penetrate is regarded as an acceptable product. The interior-side thin glass plate of the laminated glass disclosed in Patent Document 8 is made of a chemically-strengthened glass. In Patent Document 9 in which a laminated glass having a thin glass plate disposed on an interior side is disclosed, an impact applied to the laminated glass from the interior side is considered as an internal impact event as in Patent Document 8. The interior-side thin glass plate of the laminated glass disclosed in Patent Document 9 is also made of a chemically-strengthened glass.

As to a laminated glass disclosed in Patent Document 10, an impact applied to the laminated glass from the interior side is considered as an internal impact event as in Patent Documents 8 and 9. Differing from the above-mentioned laminated glasses, the laminated glass disclosed in Patent Document 10 has an exterior-side glass plate made of a chemically-strengthened glass with a small thickness of 0.5 to 1 mm and a surface compressive stress of 300 to 800 MPa and an interior-side glass plate made of a non-strengthened glass with a thickness of 1 to 2.5 mm. Patent Document 10 further proposes, as an alternative configuration of the laminated glass, the use of a thermally-strengthened glass for the interior-side glass plate. Furthermore, Patent Document 11 discloses a laminated glass formed with a glass plate of 0.8 to 3.5 mm thickness for use as an automotive side glass, wherein a center portion of the glass plate is provided with a compressive stress of 2 to 39 MPa.

### Prior Art Documents

### Patent Documents

Patent Document 1: Japanese Unexamined Patent Application Publication (Translation of PCT International Application) No. 2013-525235
Patent Document 2: Japanese Unexamined Patent Application Publication (Translation of PCT International Application) No. 2014-527011
Patent Document 3: Japanese Unexamined Patent Application Publication No. 2007-197288
Patent Document 4: PCT International Publication No. WO 2012/137742
Patent Document 5: PCT International Publication No. WO 2014/054468
Patent Document 6: Japanese Unexamined Patent Application Publication (Translation of PCT International Application) No. 2016-530190
Patent Document 7: Japanese Unexamined Patent Application Publication No. 2016-8161
Patent Document 8: Japanese Unexamined Patent Application Publication (Translation of PCT International Application) No. 2017-518246
Patent Document 9: Japanese Unexamined Patent Application Publication (Translation of PCT International Application) No. 2016-530190
Patent Document 10: Japanese Unexamined Patent Application Publication (Translation of PCT International Application) No. 2014-523389
Patent Document 11: Japanese Unexamined Patent Application Publication (Translation of PCT International Application) No. 2004-508995

### Summary of the Invention

### Problems to be Solved by the Invention

For the purpose of reducing the weight of the automotive laminated glass, it is desirable that the interior-side glass plate is made thin so as not to cause a decrease in the stiffness of the exterior-side glass plate. The use of the thin glass plate however leads to a decrease in the mechanical strength of the laminated glass. In order to compensate for such a strength decrease, it is preferable that the thin glass plate is provided with a compressive stress. From this point of view, it seems rational to dispose the thin glass plate of chemically-strengthened glass on the interior side as in the laminated glasses disclosed in Patent Documents 6 to 9.

However, the chemically-strengthened glass plate shows a relatively high impact resistance at a surface thereof because the surface of the chemically-strengthened glass plate has a compressive stress larger than 250 MPa. It is preferable that, in the occurrence of an internal impact event such as the application of an impact to the glass plate by a vehicle passenger at the occasion of a vehicle accident, the glass plate absorbs an impact energy and thereby becomes broken for the purpose of ensuring the safety of the vehicle passenger. This is an important perspective for a windshield arranged on the front side of the vehicle. From such a perspective, it seems necessary to take some ingenuity in the configuration of the laminated glass in the case where the chemically-strengthened glass plate is used as the interior-side glass plate. On the other hand, a thermally-tempered glass used as a strengthened glass is difficult to form into a thin glass plate. Although it is disclosed in Patent Document 11 that the glass plate whose center portion is provided with a compressive stress of 2 to 39 MPa is used as the constituent member of the laminated glass, preferred is the glass plate having a compressive stress of 5 MP or more, more preferably 20 MPa, in terms of mechanical properties of the laminated glass.

In view of the foregoing, the present inventors aim to provide a laminated glass used for a windshield, with a thin glass plate thereof disposed on an interior side, and having improved safety to guard against the occurrence of an internal impact event. More specifically, it is an object of the present invention to provide a laminated glass for a windshield, which is capable of, when a rigid ball of 2260 g weight is fallen from a height of 4 m onto a thin glass plate of the laminated glass, preventing the rigid ball from penetrating through the laminated glass and showing an adequate spread of glass fracture by impact of the rigid ball.

### Means for Solving the Problems

According to one aspect of the present invention, there is provided a laminated glass for an automotive windshield, comprising: a resinous intermediate film layer; a curved first glass plate disposed on an interior side; and a curved second glass plate disposed on an exterior side, the first and second glass plates being opposed to each other with the intermediate film layer interposed therebetween,
wherein the first glass plate has a thickness ranging from 0.7 mm to 3 mm,
wherein the second glass has a thickness ranging from 0.3 mm to 1.4 mm and being smaller than the thickness of the first glass plate, and
wherein the second glass plate is made of a thermally-strengthened glass with a compressive stress of less than 5 MPa.

The thermally-strengthened glass can be said as a glass having properties similar to those of a heat-strengthened glass specified in JIS R 3222 (2003). In general, a commercially available heat-strengthened glass has a compressive stress of about 30 MPa or more. The thermally-strengthened glass used in the one aspect of the present invention is largely different from the heat-strengthened glass, in that the compressive stress of the thermally-strengthened glass is much smaller than the compressive stress of the heat-strengthened glass. In the above-mentioned JIS, the heat-strengthened glass is defined as a "glass formed with a compressive stress layer of appropriate size to allow an increase in fracture strength by heat-treating a plate glass material and, when broken, show a similar way of fracturing to that of the plate glass material".

In the laminated glass for the automotive windshield according to the one aspect of the present invention, the second glass plate as a thin glass plate is made of a thermally-strengthened glass with a compressive stress of less than 5 MPa as mentioned above. This configuration prevents, in a test of simulating collision of a passenger's head with the laminated glass by falling a rigid ball of 2260 g weight from a height of 4 mm onto the fourth surface (hereinafter occasionally simply referred to as a "falling ball test"), penetration of the rigid ball through the laminated glass.

As to the glass plate having a small compressive stress as studied in the present invention, it is considered that the area of fracture of the glass plate in the falling ball test represents how much of the impact applied to the glass plate by the rigid ball is absorbed by the glass plate. This is because the value of tensile stress in the glass plate is so small that the influence of the tensile stress on the fracture behavior of the glass plate is small. The fracture area tends to become wider as the compressive stress of the second glass plate decreases. As a result of studies made by the present inventors, it has surprisingly been found that there is not seen penetration of the rigid ball through the laminated glass in the falling ball test even in the case where the second glass plate has a compressive stress of 5 MPa or less. The laminated glass in which the second glass plate has a compressive stress of 5 MPa or less allows an improved degree of spread of fracture area. The spread of the fracture area will be explained in detail later in the "Embodiments of the Invention".

A suitable production method of the laminated glass for the automotive windshield includes:
providing a stacked body which includes: a flat first glass plate formed with first and second main surfaces and having a thickness ranging from 0.7 mm to 3 mm; a flat second glass plate formed with third and fourth main surfaces and having a thickness ranging from 0.3 mm to 1.5 mm and being smaller than the thickness of the first glass plate; and a release agent layer held in contact with the second main surface and the third main surface and containing a heat-resistant powder and air dispersed between the second main surface and the third main surface; and
bending the stacked body into a curved shape by heat-forming.

By this method, the laminated glass for the automotive windshield is properly produced.

In the present invention, the value of the compressive stress refers to a stress value measured at an outermost surface of the glass plate and, more specifically, measured at a center portion of a so-called tin surface of the glass plate brought into contact with a tin bath during production of the glass plate by a float process. The stress value can be measured according to a measurement method modified from JIS R 3222 (2003). This measurement method uses a photoelastic effect. In the JIS measurement method, the compressive stress value is determined by measuring the distance of interference fringes observed on the glass plate during measurement operation. In the modified measurement method, by contrast, the compressive stress value is determined by measuring the angle of interference fringes observed on the glass plate during measurement operation. See Japanese Unexamined Patent Application Publication No. H11-281501 for the details of the modified measurement method. It is feasible to make a compressive stress measurement by the modified measurement method with the use of a commercially available babinet-type surface stress meter. For example, the compressive stress of the glass plate can be measured with a "babinet-type surface stress meter, model: BTP-H(L), manufactured by Orihara Industrial Co., Ltd."

### Effects of the Invention

The laminated glass for the automotive windshield according to the present invention is improved in safety to guard against the occurrence of an internal impact event.

### Brief Description of Drawings

FIG. 1 is a schematic cross-sectional view of an automotive laminated glass according to one embodiment of the present invention.
FIG. 2 is a schematic cross-sectional view of a stacked body of first and second glass plates before the formation of the laminated glass with curved main surfaces.
FIG. 3 is a schematic view of a state where the stacked body of the first and second glass plates is formed by bending into a curved shape.
FIG. 4 is a schematic view of a falling ball test on a laminated glass sample for verification.
FIG. 5 is a drawing-substituting photograph showing a fracture test result of a laminated glass sample for verification.
FIG. 6 is a drawing-substituting photograph showing a fracture test result of a laminated glass sample for verification.
FIG. 7 is a drawing-substituting photograph showing a fracture test result of a laminated glass sample for verification.

### Detailed Description of Embodiments

An automotive laminated glass 1 according to one embodiment of the present invention will be described below with reference to the drawings.

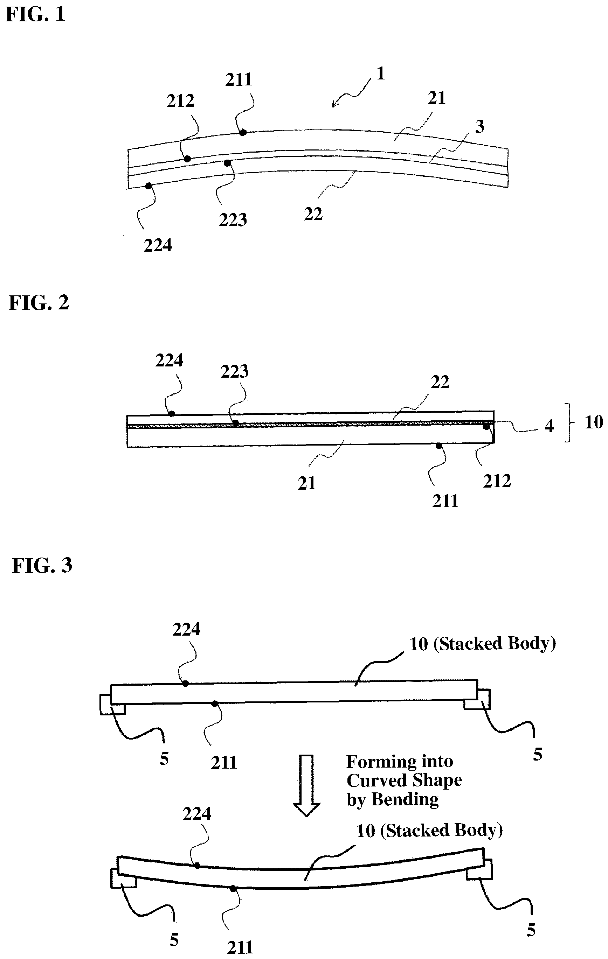

FIG. 1 schematically shows a cross section of the automotive laminated glass 1. The automotive laminated glass 1 includes a resinous intermediate film layer 3, a first plate 21 formed with curved main surfaces and a second glass plate 22 formed with curved main surfaces. The first and second glass plates 21 and 22 are opposed to each other, with the intermediate film layer 3 interposed therebetween. More specifically, the first glass plate 21 is a glass plate which has a convex-shaped first main surface 211 and a concave-shaped second main surface 212 facing the resinous intermediate film layer 3 and whose thickness is 0.7 mm to 3 mm; and the second glass plate 22 is a glass plate which has a convex-shaped third main surface 223 facing the resinous intermediate film layer 3 and a concave-shaped fourth main surface 224 and whose thickness is 0.3 mm to 1.4 mm and is smaller than that of the first glass plate 21.

As the first and second glass plates 21 and 22, suitably used are those obtained by forming flat glass plates into a curved shape such that the main surfaces of the glass plates are curved. Examples of the material of the first glass plate 21 are those of known glass compositions including not only soda-lime silicate glass specified in ISO 16293-1, but also aluminosilicate glass, borosilicate glass, alkali-free glass and the like. The material of the first glass plate 21 may be colored in gray, green, blue or the like by appropriately adding a coloring component such as iron, cobalt etc. into the glass composition. It is preferable that the first and second glass plates are those obtained by a float process and each having a surface brought into contact with a tin bath during the float process.

The first glass plate 21 is larger in thickness than the second glass plate 22 and thus higher in stiffness than the second glass plate 22. The thickness of the first glass plate 21 is preferably in the range of 0.7 mm to 3 mm. Further, it is preferable that the thickness of the first glass plate 21 is 0.2 mm or more larger, more preferably 0.5 mm or more larger, than the thickness of the second glass plate 22. When the thickness of the first glass plate 21 is smaller than 0.7 mm, the stiffness of the glass plate 21 is low so that it becomes difficult to maintain the automotive laminated glass 1 in a predetermined curved shape. When the thickness of the first glass plate 21 is larger than 3 mm, on the other hand, the weight ratio of the material of the first glass plate as the constituent member of the automotive laminated glass 1 becomes high. Such a high weight ratio of the first glass plate is not favorable from the viewpoint of weight reduction of the automotive laminated glass 1. In view of these facts, the thickness of the first glass plate 21 may be more preferably in the range of 1.3 mm to 3 mm, still more preferably 1.3 mm to 2.2 mm.

The second glass plate 22 is smaller in thickness than the first glass plate 21. The thickness of the second glass plate 22 is preferably in the range of 0.3 mm to 1.4 mm. In such a thickness range, it becomes easy to keep balance between maintaining the automotive laminated glass 1 in a predetermined curved shape and achieving the light weight of the automotive laminated glass 1. In view of these facts, the thickness of the second glass plate 22 may be more preferably in the range of 0.3 mm to 1.1 mm, still more preferably 0.5 mm to 1.1 mm.

The second glass plate 22 is made of a thermally-strengthened glass with a compressive stress of less than 5 MPa, preferably 4.5 MPa or less. With such a compressive stress, the laminated glass is improved in safety to guard against the occurrence of an internal impact event. There is no particular restriction on the lower limit of the compressive stress. The lower limit of the compressive stress may be 0.1 MPa, preferably 0.5 MPa, more preferably 1 MPa, still more preferably 2 MPa. A portion of the second glass plate 22 on which the compressive stress is exerted may be 1/5 to 1/7 of the thickness of the glass plate.

The above-mentioned stress condition can be achieved by adjusting the forming conditions for bending of the flat glass plate under heating. The flat glass plate is subjected to bending by gravity application, mold forming or the like while being heated at a temperature in the vicinity of a softening point of the glass plate.

The compressive stress layer is formed due to a difference in cooling speed between the vicinity of the surface of the glass plate and the middle portion of the glass plate until cooling of the glass plate from a softened state to a solidified state with the stop of a plastic flow in the glass plate. In the present embodiment, the cooling speed of the glass plate from the bending forming temperature of the second glass plate 22 to the strain point temperature of the second glass plate 22 is set to 40°C/min to 120°C/min. By such cooling speed control, the cooling speed of the main surface of the glass plate is set slightly higher than the cooling speed of the middle portion of the glass plate whereby a compressive stress of less than 5 MPa is exerted on the main surface of the glass surface.

When the glass plate 21 and the glass plate 22 are simultaneously subjected to bending forming in a state that the glass plate 21 and the glass plate 22 are stacked together with a slight clearance of e.g. 10 µm to 20 µm left between the glass plates 21 and 22, the cooling speed after the bending forming is made slightly higher at the third main surface side than in the middle portion of the glass plate whereby a compressive stress of less than 5 MPa is also be exerted on the third main surface side. In the case where the cooling speed of the third main surface becomes equal to the cooling speed of the middle portion of the glass plate due to e.g. insufficient clearance between the glass plates, there is a possibility that the tensile stress layer formed in the middle portion of the glass plate 22 may reach the third main surface. In such a case, the resistance of the automotive laminated glass to penetration of the rigid ball in the falling ball test tends to become lowered.

The glass plate 21 disposed on the exterior side may have a stress configuration similar to that of the glass plate 22. In other words, the first glass plate 21 can preferably be made of a thermally-strengthened glass with a compressive stress of less 5 MPa, more preferably 4.5 MPa or less. There is no particular restriction on the lower limit of the compressive stress. The lower limit of the compressive stress may be 0.1 MPa, preferably 0.5 MPa, more preferably 1 MPa, still more preferably 2 MPa. A layer portion of the first glass plate on which the compressive stress is exerted may be 1/5 to 1/7 of the thickness of the glass plate.

It is feasible to measure the strain point temperature of the glass plate 21, 22 according to JIS R 3103-2 (2001). A glass sample used in the measurement according to this standard can be a specimen sampled from the glass plate 21, 22 or a specimen formed of the same glass composition as the glass plate 21, 22.

It is feasible to measure the softening point temperature of the glass plate 21, 22 according to JIS R 3103-1 (2001). A glass sample used in the measurement according to this standard can be a specimen sampled from the glass plate 21, 22 or a specimen formed of the same glass composition as the glass plate 21, 22.

The bending forming temperature can be adjusted within the range of ±100°C from the softening point of the glass plate. In the present embodiment, the bending forming temperature is considered as the maximum temperature attained during the heating of the glass plates.

In the case where the glass plates 21 and 22 are subjected to bending forming in a stacked state, the curvature of the thinner one of the glass plates may become greater than the curvature of the other glass plate. Although it is ideal that the glass plates 21 and 22 are formed with the same curvature, the glass plates 21 and 22 may be subjected to bending forming by simplifying the settings of the heat treatment conditions for bending forming of the glass plates such that the curvatures of the glass plates 21 and 22 becomes different from each other after the bending forming.

The laminated glass 1 can be produced in a state that the glass plate 22 is corrected by pressing such that the curvature of the glass plate 22 becomes equal to the curvature of the glass plate 21 during thermocompression bonding of the glass plates 21 and 22 and the resinous intermediate film layer 3. In the case where the curvature of the glass plate 22 is greater than the curvature of the glass plate 21 before correction of the curvature of the glass plate 22 during the thermocompression bonding, the curvature correction causes a compressive stress on the main surface 224 to allow an increase of compressive stress and causes a tensile stress on the main surface 223 to allow a decrease of compressive stress. In the case where the curvature of the glass plate 22 is smaller than the curvature of the glass plate 21 before correction of the curvature of the glass plate 22 during the thermocompression bonding, on the other hand, the curvature correction causes a tensile stress on the main surface 224 to allow a decrease of compressive stress and causes a compressive stress on the main surface 223 to allow an increase of compressive stress. In order to improve the strength of the exposed surface of the automotive laminated glass 1, it is preferable that the curvature of the glass plate 22 is greater than the curvature of the glass plate 21 before the correction of the curvature of the glass plate 22 during the thermocompression bonding.

There is a case where the adjustment of the compressive stress value by the curvature correction induces breakage of the glass plate 22 during the production process of the laminated glass 1. The occurrence of such glass breakage leads to a deterioration in the production yield of the laminated glass 1. For this reason, the proportion of the adjustment of the compressive stress value before and after the curvature correction may be set within the range of ±20%, preferably within the range of ±10%, more preferably within the range of ±5%

The resinous intermediate film layer 3 functions to bond the first glass plate 21 and the second glass plate 22 together by heating. Examples of the resin usable as the material of the resinous intermediate film layer 3 are polyvinyl butyral (PVB), ethylene-vinyl acetate (EVA), acrylic resin (PMMA), urethane resin, polyethylene terephthalate (PET), cyclo-olefin polymer (COP) and the like. The resinous intermediate film layer 3 may be formed with a plurality of resin layers.

Next, consideration will be given to the difference in fracture behavior of the glass plate depending on the difference of the stress exerted on the glass plate.

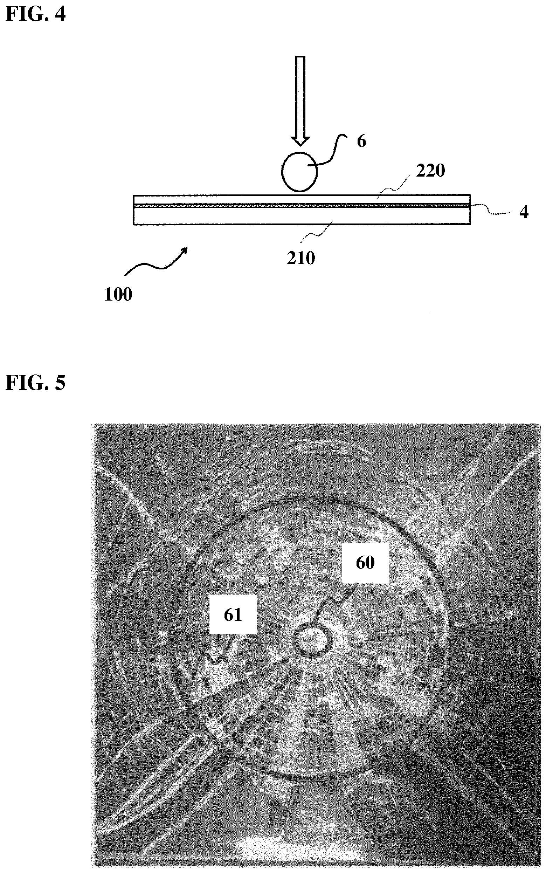

FIG. 4 schematically shows a falling ball test on a laminated glass sample 100 for verification. The laminated glass sample 100 for verification prepared was in the form of a 30 cm × 30 cm square plate. In the laminated glass sample 100, a glass plate 220 of 1.1 mm thickness was used as corresponding to the second glass plate 22; and a glass plate 210 of 1.8 mm thickness was used as corresponding to the second glass plate 21. Each of the glass plates 210 and 220 was formed by a float process from a soda-lime glass with a strain point of 500°C.

A compressive stress was exerted on the second glass plate 22 by the following procedure. A stacked body was obtained by stacking a release agent layer between the plate-shaped first glass plate 210 and the plate-shaped second glass plate 220. Herein, the release agent layer was composed of a powder of boron nitride with a particle size ranging from 10 µm to 20 µm in absolute value and 70 vol% of air. In a heating furnace for automotive laminated glass production, the stacked body was heated at a furnace inside setting temperature of 600°C. Then, the stacked body was cooled from this setting temperature to the strain point temperature at a cooling speed of 70°C/min or higher. By varying the cooling speed, the second glass plate 22 was provided with a stress of 4 MPa, 15 MPa or 25 MPa.

An intermediate film layer 4 of PVD as the resinous intermediate layer was thermocompression bonded to the glass plates, thereby obtaining the laminated glass sample 100 for verification. In the laminated glass sample 100, the intermediate film layer 4 was 0.8 mm in thickness. For each type of laminated glass sample, a rigid ball of 2268 g was fallen from a height of 4 m onto the main surface of the glass plate 220. The state of glass fracture in this test was observed. The test results are shown in the drawing-substituting photographs of FIGS. 5 to 7. In FIGS. 5 to 7, reference numerals, lines and circles for impact points 60 and circular fracture areas 61 are indicated by photo processing.

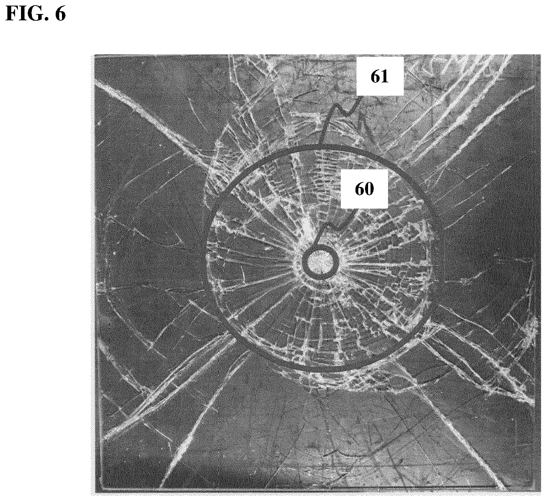

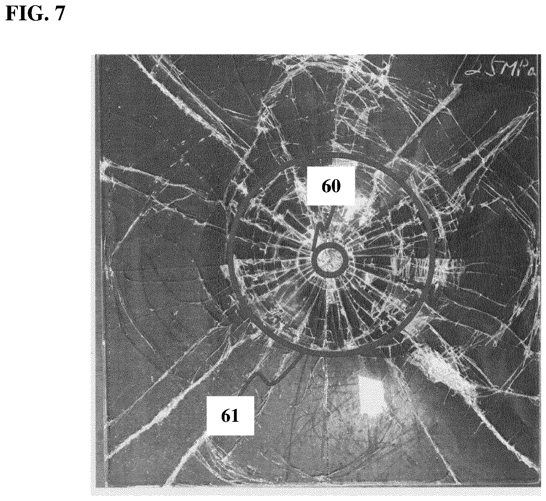

FIG. 5 shows the test result of the laminated glass sample in which a compressive stress of 4 MPa was exerted on the exposed surface of the second glass plate of 1.1 mm thickness. FIG. 6 shows the test result of the laminated glass sample in which a compressive stress of 15 MPa was exerted on the exposed surface of the second glass plate of 1.1 mm thickness. FIG. 7 shows the test result of the laminated glass sample in which a compressive stress of 25 MPa was exerted on the exposed surface of the second glass plate of 1.1 mm thickness.

In each sample, there did not occur penetration of the rigid ball. As seen in the sample in which the glass plate was provided with a compressive stress of 25 MPa (FIG. 7), the circular fracture area 61 was spread to a diameter about six times that of the impact point 60 of the rigid ball onto the glass plate. It is thus apparent the glass plate shows an adequate spread of fracture by impact of the rigid ball. As seen in the sample in which the glass plate was provided with a compressive stress of 15 MPa (FIG. 6), the circular fracture area 61 was spread to a diameter about seven times that of the impact point 60. As seen in the sample in which the glass plate was provided with a compressive stress of 4 MPa (FIG. 5), the circular fracture area 61 was spread to a diameter about ten times that of the impact point 60. It is verified from these results that, in the occurrence of an internal impact event, the glass plate with a compressive stress of less than 5 MPa absorbs more impact for improved safety of vehicle passengers. It is known that: the flat glass plate is more disadvantageous than the curved glass plate in terms of mechanical strength; and, under the condition of the same thickness of the glass plate, the main factor for the spread of fracture caused in the glass plate by the rigid ball is a stress exerted on the glass plate. Therefore, the above verification results also applies to the automotive laminated glass 1 with curved glass plates.

One suitable production method of the automotive laminated glass 1 includes the following steps of:
(A) providing a stacked body 10 which includes: a flat first glass plate 21 formed with first and second main surfaces 211 and 212 and having a thickness ranging from 0.7 mm to 3 mm; a flat second glass plate 22 formed with third and fourth main surfaces 223 and 224 and having a thickness ranging from 0.3 mm to 1.5 mm and being smaller than the thickness of the first glass plate; and a release agent layer 4 held in contact with the second main surface and the third main surface and containing a heat-resistant material powder and air dispersed between the second main surface and the third main surface;
(B) arranging the stacked body 10 horizontally or substantially horizontally on a forming ring 5 with the first main surface 211 directed downward, and then, transferring the forming ring 5 on which the stacked body 10 has been arranged in a heating furnace so as to heat the first and second glass plates 221 and 22 to a bending forming temperature;
(C) bending the stacked body which has been heated to the bending forming temperature into a curved shape;
(D) cooling the bent stacked body at a cooling speed of 40°C/min to 120°C/min from the bending forming temperature to a lower one of strain point temperatures of the first and second glass plates;
(E) separating the first glass plate and the second glass plate from each other; and
(F) arranging a resinous intermediate film layer so as to face the concave-shaped second main surface and the convex-shaped third main surface and thermocompression bonding the resinous intermediate layer to the first and second glass plates,
wherein, in the steps (A) to (D), the clearance between the second main surface and the third main surface is 10 µm to 20 µm.

The respective steps will be explained below with reference to FIGS. 2 and 3.

FIG. 2 schematically shows the stacked body 10 (in cross section) of the first glass plate 21 and the second glass plate 22 before the bending of the glass plates into a curved shape. FIG. 3 schematically shows the state of forming the stacked body 10 by bending into a curved shape.

In the step (A), the stacked body 10 is obtained by stacking the glass plates 21 and 22 via the release agent layer 4. The release agent layer 4 is held in contact with the second main surface 212 and in contact with the third main surface 223 and is composed of a heat-resistant material powder and air dispersed between the second main surface and the third main surface. Suitable examples of the heat-resistant material powder are powders of ceramic materials such as boron nitride, diatomaceous earth, magnesium oxide etc. By the use of the heat-resistant material powder with a particle diameter ranging from 10 µm to 20 µm in absolute value, the clearance between the second and third main surfaces can be set to 10 µm to 20 µm in the steps (A) to (D).

In terms of balance between the cooling efficiency of the main surfaces 212 and 223 in the step (D) and the retention of the clearance between the main surfaces 212 and 223, the amount of the air contained in the release agent layer is preferably adjusted to 65 vol% to 85 vol%, more preferably 70 vol% to 80 vol%.

In the step (B), the stacked body 10 is arranged horizontally or substantially horizontally on the forming ring 5 with the first main surface 211 directed downward. The forming ring 5 is adapted to hold an outer peripheral part of the stacked body 10 from the main surface 211 side. Examples of the forming ring 5 are those made of metal steels such as stainless steel, iron steel etc. While the forming ring 5 on which the stacked body 10 is held is transferred in the heating furnace, the first and second glass plates are heated to the bending forming temperature.

Subsequently, the stacked body is bent into a curved shape in the step (C). In this step, a part of the stacked body which is not held by the forming ring 5 may be bent into a predetermined shape under its own weight (that is, may be subjected to so-called self-weight bending). Alternatively, the stacked body 10 may be formed into a predetermined shape by being pressed between the forming ring 5 and a press mold (that is, may be subjected to so-called press forming).

The stacked body 10 which has been bent into a curved shape is cooled in the step (D). More specifically, the stacked body 10 is cooled from the bending forming temperature to the lower one of the stain point temperatures of the first and second glass plates at a cooling speed of 40°C/min to 120°C/min, preferably 50°C/min to 100°C/min, more preferably 60°C/min to 90°C/min, in the step (D). In the present embodiment, the stacked body 10 is heated and then cooled while being transferred in the heating furnace. In other words, the heating furnace has a temperature profile in which the temperature gradually increases to the bending forming temperature and then gradually decreases in the transfer direction of the stacked body 10. The cooling speed of the stacked body 10 after the bending forming can be adjusted by controlling the temperature profile of the heating furnace and the transfer speed of the stacked body 10

In the subsequent step (E), the stacked first and second glass plates 21 and 22 are once separated from each other.

In the step (F), the laminated glass precursor structure in which the resinous intermediate film layer 3 is arranged to face the concave-shaped second main surface 212 and the convex-shaped third main surface 223 is formed, and then, the resinous intermediate film layer 3 is thermocompression-bonded to the first and second glass plates 21 and 22. The thermocompression bonding of the resinous intermediate film layer 3 to the first and second glass plates 21 and 22 is done by holding the laminated glass precursor structure at 100 to 150°C for 15 to 60 minutes while applying a pressure of 1.0 to 1.5 MPa to the laminated glass precursor structure. As a result, the automotive laminated glass shown in FIG. 1 is obtained. The thermocompression bonding can be done in, for example, an autoclave. It is preferable to degas the space between the resinous intermediate film layer 3 and the respective glass plate 21, 22 before the thermocompression bonding of the resinous intermediate film layer 3 to the first and second glass plates 21 and 22.

The laminated glass 1 may be produced by setting the curvature of the second glass plate greater than the curvature of the first glass plate in the stacked body after the step (D) and correcting the curvature of the second glass plate to be equal to the curvature of the first glass plate in the step (F). The curvature correction of the second glass plate 22 may be done, in a state that the first glass plate 21, the resinous intermediate film layer 3 and the second glass plate are stacked into one unit, by sandwiching a peripheral part of the laminated glass precursor structure with a clip etc.

The difference between the stain point temperature of the first glass plate and the stain point temperature of the second glass plate may be set to 0°C to 20°C in order to make the behavior of the first glass plate during the bending forming step or cooling step similar or close to that of the second glass plate.

Although the present invention has been described above with reference to the specific embodiments, the present invention is not limited to the above-described specific embodiments. Various modifications and variations of the embodiments described above will occur within the scope of the present invention.

### Description of Reference Numerals

- 1:: Automotive laminated glass
- 21:: First glass plate
- 22:: Second glass plate
- 3:: Resinous intermediate film layer
- 4:: Release agent layer
- 5:: Forming ring

## Claims

1. A laminated glass for an automotive windshield, comprising: a resinous intermediate film layer; a curved first glass plate disposed on an interior side; and a curved second glass plate disposed on an exterior side, the first and second glass plates being opposed to eachother with the intermediate film layer interposed therebetween,
wherein the first glass plate has a thickness ranging from 0.7 mm to 3 mm,
wherein the second glass plate has a thickness ranging from 0.3 mm to 1.4 mm and being smaller than the thickness of the first glass plate, and
wherein the second glass plate is made of a thermally-strengthened glass with a compressive stress of less than 5 MPa.

2. The laminated glass for the automotive windshield according to claim 1, wherein the first glass plate is made of a thermally-strengthened glass with a compressive stress of less than 5 MPa.

3. The laminated glass for the automotive windshield according to claim 1 or 2, wherein the thickness of the first glass plate is in the range of 1.3 mm to 3 mm.

4. The laminated glass for the automotive windshield according to any one of claims 1 to 3, wherein the thickness of the second glass plate is in the range of 0.3 mm to 1.2 mm.

5. A laminated glass production method for production of the laminated glass for the automotive windshield according to any one of claims 1 to 4, comprising:
providing a stacked body which includes: a flat first glass plate formed with first and second main surfaces and having a thickness ranging from 0.7 mm to 3 mm; a flat second glass plate formed with third and fourth main surfaces and having a thickness ranging from 0.3 mm to 1.5 mm and being smaller than the thickness of the first glass plate; and a release agent layer held in contact with the second main surface and the third main surface and containing a heat-resistant powder and air dispersed between the second main surface and the third main surface; and
bending the stacked body into a curved shape by heat-forming.

6. The laminated glass production method according to claim 5, wherein the release agent layer contains the air in an amount of 65 vol% to 85 vol%.

7. The laminated glass production method according to claim 5 or 6, wherein the bending of the stacked body includes cooling the stacked body at a cooling speed of 40°C/min to 120°C/min from a maximum temperature of the stacked body attained during the heat-forming to a lower one of strain point temperatures of the first and second glass plates.

8. The laminated glass production method according to any one of claims 5 to 7, wherein a difference between the strain point temperature of the first glass plate and the strain point temperature of the second glass plate is 0°C to 20°C.
